Europäisches Patentamt

European Patent Office

Office européen des brevets

(19)

(11) EP 0 632 090 B1

(12) **EUROPÄISCHE PATENTSCHRIFT**

(45) Veröffentlichungstag und Bekanntmachung des Hinweises auf die Patenterteilung:
**01.07.1998 Patentblatt 1998/27**

(51) Int Cl.$^6$: **C08J 9/14**, C08J 9/00
// C08L25/04, C08L55/02

(21) Anmeldenummer: **94108287.7**

(22) Anmeldetag: **30.05.1994**

(54) **Verfahren zum Verschäumen von flammhemmend ausgerüsteten Styrolpolymerisaten**

Process for foaming fire retardant styrenic polymers

Procédé d'expansion de polymères styréniques ignifuges

(84) Benannte Vertragsstaaten:
**AT BE CH DE DK ES FR GB IT LI NL PT SE**

(30) Priorität: **05.06.1993 DE 4318743**

(43) Veröffentlichungstag der Anmeldung:
**04.01.1995 Patentblatt 1995/01**

(73) Patentinhaber: **Depron B.V.**
**6002 SM Weert (NL)**

(72) Erfinder:
- **Vonken, Hub A.G.**
  **NL-6006 CW Weert (NL)**
- **op den Buysch, Jan**
  **NL-6024 RC Budel-Dorplein (NL)**

(74) Vertreter: **Zounek, Nikolai, Dipl.-Ing. et al**
**Patentsanwaltskanzlei Zounek,**
**Industriepark Kalle Albert,**
**Gebäude H287**
**65203 Wiesbaden (DE)**

(56) Entgegenhaltungen:
**EP-A- 0 084 226**       **US-A- 5 112 875**

- **DATABASE WPI Week 8404, 8. Dezember 1983 Derwent Publications Ltd., London, GB; AN 84-020629 'Thermoplastic resin foam.' & JP-A-58 211 426 (SEKISUI PLASTICS K. K.)**
- **DATABASE WPI Week 8215, 3. März 1982 Derwent Publications Ltd., London, GB; AN 82-29432E 'Blending styrene resin with foamer and flame retardant mixt.' & JP-A-57 038 832 (SEKISUI PLASTICS K. K.)**
- **DATABASE WPI Week 8040, 26. August 1980 Derwent Publications Ltd., London, GB; AN 80-70721C 'Dimentionnaly stable styrene resin foam production.' & JP-A-55 110 131 (SEKISUI PLASTICS K. K.)**

**Beschreibung**

Die Erfindung betrifft ein Verfahren zum Verschäumen von flammhemmend ausgerüstetem Polystyrol durch Zusatz eines Treibmittel gemischs aus Propan und Butan und einen Polystyrol-Formkörper aus extrudiertem Polystyrolschaum.

Auf dem Gebiet von flammhemmend ausgerüsteten Baustoffen, wie Kunststoffplatten, Schaumfolien, Wärmeisolier-Folienbahnen und dergleichen, die aus geschäumten Kunststoffschmelzen durch Extrusion hergestellt werden, sind im allgemeinen brennbare Gase als Treibmittel für die Schaumbildung eingesetzt. Die Brennbarkeit dieser Treibmittel bzw. Treibgase steht der Forderung nach Flammschutz entgegen, so daß solche Baustoffe erst nach einer längeren Lagerungszeit, in der das Treibgas aus den Zellen des Kunststoffschaums entweichen kann, ihre vollen flammhemmenden Eigenschaften entwickeln.

Aus den JP-A-58/211426 und JP-A-57/038832 ist das Verschäumen von flammhemmend ausgerüstetem Polystyrol bekannt, wobei als Treibmittel Propan oder Butan eingesetzt wird. Bei Verwendung von 100 %igem Butan als Treibmittelgas wird der Flammschutz für das Polystyrol erst nach einer Lagerung von mehr als 3 Monaten erreicht.

Aus dem deutschen Gebrauchsmuster 92 11 584 ist ein Formkörper aus Polystyrol-Recyclat bekannt, der dadurch erhalten wird, daß Abfallpolystyrol-Schaum zum Entweichenlassen von eingeschlossener Luft zu Polystyrol eingeschmolzen und die Schmelze sodann nach Zugabe von Treibmittel in expandiertes Polystyrol übergeführt wird. Als Treibmittel wird Pentan verwendet, wobei der Schäumungsvorgang im Kopf eines Extruders stattfindet. Der bekannte Formkörper wird in Gestalt sogenannter endloser Platten produziert, die in die gewünschten Längen und Breiten geschnitten und sodann der Weiterverarbeitung als Bauplatte zugeführt werden. Der bekannte Formkörper enthält einen Flammschutzzusatz, wodurch er schwerentflammbar gemäß der Baustoffklasse B1 nach DIN 4102 ist. Der bekannte Polystyrol-Recyclat-Formkörper dient als Dämmstoff für das Bauwesen und erfüllt die Erfordernisse der DIN 18 164 Teil 1.

Zur Herstellung des Polystyrolschaumes als Ausgangsprodukt des bekannten Formkörpers wird die Schmelze aus Abfallpolystyrol auf eine Temperatur unterhalb der Schmelztemperatur abgekühlt, in Fäden gepreßt und die gekühlten Fäden in Stücke zerkleinert. Diese Teilstücke werden in einem weiteren Extruder aufgeschmolzen, mit Pentan als Treibgas versetzt, das mit hohem Druck eingepreßt wird, und anschließend die Schmelze bei Temperaturen unterhalb 150 °C über eine Breitschlitzdüse als weicher Schaum extrudiert und durch Kalibrierung ausgeformt. Die Lagerungszeit bis zum Eintreten der vollen flammhemmenden Eigenschaften dieser Baumaterialien wird nicht angesprochen.

Aufgabe der Erfindung ist es, das eingangs beschriebene Verfahren so zu verbessern, daß ein flammhemmend ausgerüsteter Polystyrolschaum erhalten wird, mit dem trotz des Einsatzes von brennbaren Gasen als Treibmittel die Lagerungszeit der daraus hergestellten Baumaterialien bis zum Erreichen ihrer vollen flammhemmenden Eigenschaften verkürzt wird.

Diese Aufgabe wird erfindungsgemäß durch ein Verfahren in der Weise gelöst, daß der Polystyrolschmelze Mischungen aus Propan und Butan mit 60 bis 90 Vol.-% Propan und 40 bis 10 Vol.-% n-Butan und/oder iso-Butan zugemischt werden und daß der Gehalt an Treibmittel bis zu 3 Gew.-% des Gesamtgewichts des Polystyrols ausmacht.

In Weiterführung des Verfahrens wird die Polystyrolschmelze aus einem Polystyrol-Copolymerisat, einem Copolymerisat aus Styrol und Butadien oder Polymeren des Styrols oder Mischungen hiervon erschmolzen.

In Ausgestaltung des Verfahrens wird die Polystyrolschmelze aus Styrol-Maleinsäure-Anhydridcopolymeren, Acryl-Butadienstyrol und Mischungen hiervon erschmolzen, wobei gegebenenfalls Polyphenylenoxid zugemischt, wird.

Die weiteren Verfahrensschritte der Erfindung ergeben sich aus den Merkmalen der Patentansprüche 4 bis 9.

In Weitergestaltung der Erfindung enthält ein Polystyrol-Formkörper aus extrudiertem Polystyrolschaum ein Treibmittelgas und ein Flammschutzmittel, und zeichnet sich dadurch aus, daß der Polystyrol-Formkörper eine Dicke von 1 bis 10 mm, eine Breite von 50 bis 320 cm, eine Schaumdichte von 30 bis 70 g/l und einen Treibmittelgehalt von bis zu 3 Gew.-% hat, wobei das Treibmittelgas aus einer Mischung aus Propan und Butan mit 60 bis 90 Vol.-% Propan und 40 bis 10 Vol.-% n-Butan und /oder iso-Butan besteht.

Die weitere Ausgestaltung des Polystyrol-Formkörpers ergibt sich aus den Merkmalen der Patentansprüche 11 bis 13.

Der Polystyrol-Formkörper nach der Erfindung ist nach einer Lagerungszeit von 1 bis 13 Wochen normal- bis schwerentflammbar gemäß den Baustoffklassen B2 und B1 nach DIN 4102. Der Treibgasgehalt mit z.B. einer Propan-/Butanmischung von 60/40 liegt dann unter 1,9 Gew.% ..

Mit der Erfindung werden die Vorteile erzielt, daß die Lagerungszeit der aus Polystyrolschaum hergestellten Formkörper zum Erreichen der vollen flammhemmenden Eigenschaften verkürzt wird und daß die Poren bzw. Zellen des Formkörpers auch noch nach einer Woche Lagerungszeit ausreichend Treibmittel enthalten, um eine Aufschäumung um einen Faktor von 1,8 bis 2,0 durch eine nachträgliche Wärmebehandlung herbeizuführen. Von Vorteil ist auch, daß durch entsprechende Auswahl der Treibmittelzusammensetzung die Kohlenwasserstoffemission reduziert werden kann.

Die Erfindung wird im folgenden näher besch.rieben, unter Bezugnahme auf die Zeichnungen. Lediglich das Treibmittelgemisch aus 60% Propan und 40% Butan ist dabei erfindungsgemäß, alle anderen Zusammensetzungen sind Vergleichsbeispiele. Es zeigen:

Figur 1    das Flammschutzverhalten von Polystyrol-Formkörpern und das Ausgasen von Treibmittel, in Abhängigkeit von der Lagerungszeit, für verschiedene Zusammensetzungen und Gewichtsprozente des Treibmittels,

Figur 2    den Mineralgehalt in Gew.% im Polystyrolschaum, in Abhängigkeit von dem Talkumanteil in Prozenten in der Talkum-/Kreidemischung,

Figur 3    den Aufschäumungsfaktor des eine Woche gelagerten Polystyrol-Formkörpers, in Abhängigkeit von der Wärmenachbehandlungszeit, und den Treibgasgehalt in Gew. %, und

Figur 4    den Emissionsindex von Propan, Butan und Mischungen hiervon aus Polystyrolschaum, der eine bestimmte Schaumdichte besitzt.

Eine Polystyrolschmelze aus Polystyrolgranulat, Flammschutzmittel und Nukleierungsmittel wird im ersten Extrusionsschritt aufgeschmolzen. Dieser Schmelze werden Gase als Treibmittel unter hohem Druck von bis zu 350 bar am Ende des ersten Extrusionsschrittes injiziert. Das Treibmittel wird mit der Polystyrolschmelze homogen vermischt, und vor einem zweiten Extrusionsschritt wird die Polystyrolschmelze weiter homogenisiert und auf eine Massetemperatur unterhalb von 150 °C vor der Extrusion abgekühlt. Als Treibmittel wird der Polystyrolschmelze eine Mischung von 60 bis 90 Vol.% Propan und 10 bis 40 Vol.% n-Butan und/oder 10 bis 40 Vol.% iso-Butan zugeführt. Die Grundstoffe für den extrudierten Schaum sind Polystyrol-Copolymerisat, Copolymerisate aus Styrol und Butadien, Styrol-Polymere, Styrol-Maleinsäureanhydrid-Copolymere, Acryl-Butadien-Styrol oder Mischungen hiervon, gegebenenfalls in Abmischung mit Polyphenylenoxid.

Die zugesetzten Nukleierungsmittel dienen dazu, möglichst gleichmäßige Poren- bzw. Zellenabmessungen in der aus der Polystyrolschmelze extrudierten geschäumten Polystyrolfolie oder dem Polystyrol-Formkörper zu erhalten. Als Nukleierungsmittel werden vor allem Kreide und/oder Talkum, jeweils in Abhängigkeit von der Treibmittelzusammensetzung ausgewählt, zugesetzt. Der Talkumanteil in der Talkum-/Kreidemischung kann mit steigendem Propananteil in dem Treibmittel verringert werden, wie später noch anhand der Figuren erläutert werden wird. Als endotherme Nukleierungsmittel können Citronsäure und Natriumbikarbonat verwendet werden.

Halogenierte Alkyl-arylphosphate, Ammoniumpolyphosphate, Hexabromcyclododecan, Magnesiumhydroxid, werden als Flammschutzmittel den Ausgangsstoffen der Polystyrolschmelze zugesetzt.

Das Extrudat aus Polystyrolschaum wird in einer Tandem-Extruderanlage hergestellt. In einem ersten Extrusionsschritt wird im Primärextruder eine Mischung aus Polystyrolgranulat, Flammschutzmittel und Nukleierungsmittel zu einer homogen fließenden Polystyrolschmelze aufbereitet. Am Ausgang des Primärextruders wird das Treibmittel unter hohem Druck injiziert und intensiv mit der Polystyrolschmelze gemischt. Diese Mischung wird mit Hilfe einer Umlenkeinrichtung in einen Sekundärextruder transportiert und in diesem weiter homogenisiert und auf die gewünschte Massetemperatur unterhalb von 150 °C abgekühlt. Anschließend wird diese Polystyrolschmelze durch eine Ringdüse mit engem Spalt extrudiert. Die Schaumbildung in der Polystyrolschmelze erfolgt beim Austreten der Polystyrolschmelze aus der Ringdüse. Der aus der Ringdüse extrudierte Schaumfolienschlauch besitzt ein bestimmtes Aufblasverhältnis und wird anschließend über einen Kühldorn gezogen und am Ende des Kalibriervorgangs in zwei Folienbahnen geschnitten und zu Rollen aufgewickelt. Bei den Rollen handelt es sich um geschlossen-zellige bzw. geschlossen-porige Schaumfolien mit einer Dicke von 1 bis 5 mm, einer Breite von 50 bis 320 cm, einer Schaumdichte von 60 bis 70 g/l und einem Treibmittelgehalt von bis etwa 3,0 Gew.%. Dieser Treibmittelgehalt kommt dadurch zustande, daß unmittelbar nach Bildung des Polystyrolschaumes die feinen Zellen bzw. Poren mit Treibmittel gefüllt sind und der partielle Luftdruck in den Poren gleich Null ist. Dieser Treibmittelgehalt von bis zu 3,0 Gew.% reicht aus, daß eine adäquate Postexpansion durch eine nachträgliche Wärmebehandlung möglich ist. Die spezifischen Abmessungen der Schaumfolie ergeben sich durch die Abmessungen der verwendeten Ringdüse. Anstelle einer Ringdüse kann auch eine entsprechende Breitschlitzdüse am Sekundärextruder eingesetzt werden, um Plattenware mit einer Dicke von 2 bis 10 mm, einer Breite von 50 bis 200 cm, einer Schaumdichte von 30 bis 40 g/l und einem Treibmittelgehalt nach drei Wochen Lagerungszeit von 1,7 bis 1,9 Gew.% zu erhalten.

Nach der Extrusion des Schaumfolienschlauches oder des Formkörpers diffundiert das Treibmittel sehr langsam aus den Poren des Polystyrolschaumes, andererseits erfolgt eine sehr schnelle Luftintrusion, die nach dem Dalton-Gesetz zu einer Erhöhung des gesamten Gasdruckes in den Zellen führt. Der optimale Gasdruck für eine nachträgliche Wärmebehandlung der Schaumfolie bzw. des Formkörpers wird innerhalb einiger Tage Lagerungszeit bei Raumtemperatur erreicht. Beispielsweise kann die Schaumdichte von Plattenware, die zu Dämmplatten verarbeitet wird, mit Hilfe einer nachträglichen Wärmebehandlung in einem sogenannten Postexpansionsvorgang um den Faktor bis zu 2 erniedrigt werden, was gleichbedeutend mit einer Erhöhung des Wärmedämmverhaltens um den Faktor 2 ist.

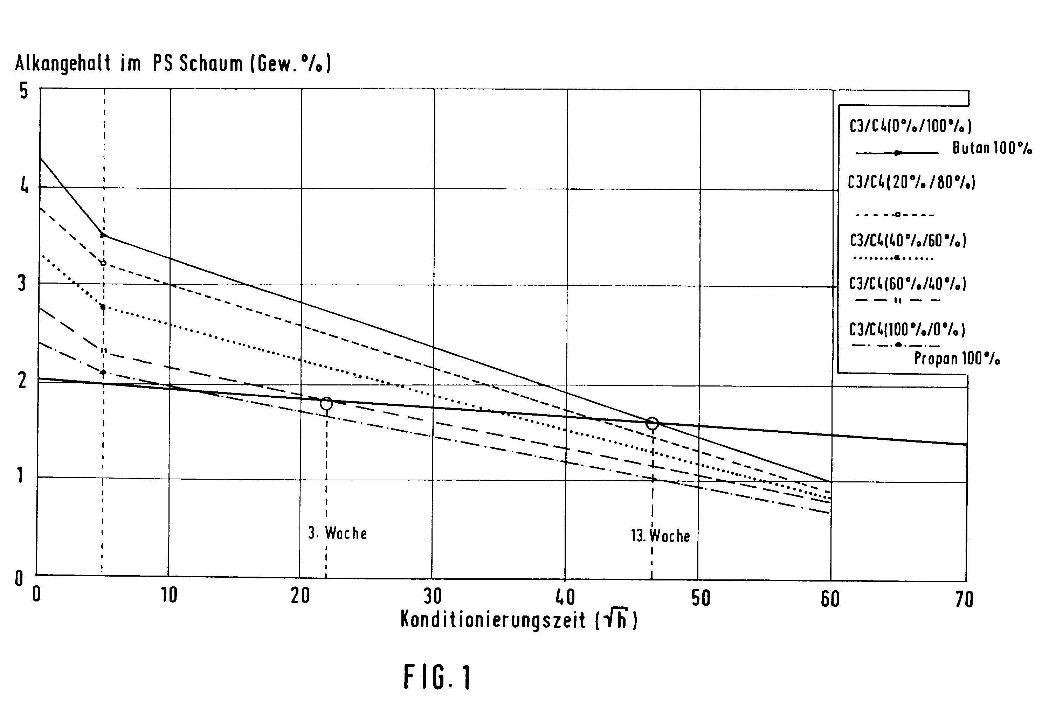

Polystyrolschmelzen, die nach der direkten Injektion von Treibmittel, wie n-Butan, zu Polystyrolschäumen extrudiert werden, zeigen, obwohl sie flammhemmend ausgerüstet sind, nur nach einigen Monaten Lagerung bei Raumtemperatur von 22 °C gute flammhemmende Wirkung, d.h. sie sind normal- bis schwerentflammbar gemäß den Baustoffklassen B2 und BI nach DIN 4102, wie aus Fig. 1 ersichtlich ist. In dieser Figur ist das Ausgasen von Butan, Propan und Mischungen dieser beiden Alkane, in Abhängigkeit von der Konditionierungszeit, dargestellt. Die Konditionierungszeit ergibt sich durch Wurzelbildung aus der Lagerungszeit. Parameter der Kurven ist das Mischungsverhältnis von Propan zu Butan, wobei die Kurvenschar von reinem Propan und reinem Butan als Treibmittel begrenzt wird. Die Schaumdicke beträgt 3,2 mm und die Schaumdichte 65 g/l. Der Gehalt an Treibmittel in Gewichtsprozent, bezogen auf den Polystyrolschaum, liegt zu Beginn des Ausgasens bzw. unmittelbar nach Beendigung des zweiten Extrusionsschrittes im Bereich von 2,6 bis 4,3 Gew.%. Nach dreizehn Wochen Lagerungszeit beträgt der Gewichtsanteil des Treibmittels weniger als 1,6 %. Wird die oberste Kurve in Fig. 1 betrachtet, die einen Butananteil von 100 % im Treibmittel anzeigt, so ist zu erkennen, daß die Butanausgasung aus den Poren des Polystyrolschaumes sehr träge erfolgt. Die Butanpermeabilität nimmt in ähnlicher Weise wie der Diffusionskoeffizient, bei steigender Lagerungstemperatur, stark zu. Diese Temperaturabhängigkeit der Butanpermeabilität kann durch eine Gleichung vom Arrhenius-Typ beschrieben werden:

$$P = P_0 e^{-E_p/RT}$$

worin $P_0$ eine Konstante, $E_p$ die Aktivierungsenergie des Gesamtpermeationsprozesses, R die Gaskonstante und T die Temperatur bedeuten. Eine Temperaturbelastung von beispielsweise maximal 60 °C verkürzt die Lagerungszeit erheblich, jedoch ergeben sich dadurch energetische und umweltbedingte Aspekte, die eine Wärmebehandlung bei diesen Temperaturen aus wirtschaftlichen Gründen nicht empfehlenswert erscheinen lassen. Zu diesen Gründen zählen u.a. der hohe energetische Aufwand für das Aufheizen auf 60 °C, die starke Ausgasung und die dadurch bedingte zusätzliche Emission von Kohlenwasserstoffen in die Umgebung und die Schwierigkeit, eine vernünftige Wärmenachbehandlung zum Erzielen einer Postexpansion von Polystyrol-Formkörpern durchführen zu können, da dann im allgemeinen der Gehalt an Treibmittel in den geschlossenen Zellen für die Postexpansion nicht mehr ausreicht. In Figur 1 ist eine Trennungslinie zwischen leicht- und normal- bis schwerentflammbaren Polystyrolschäumen gezogen, wobei diese Trennungslinie nicht horizontal, sondern, mit steigender Konditionsierungszeit, leicht schräg abfallend verläuft. Je größer der Propananteil im Treibmittel ist, umso eher wird ein Flammschutz gemäß der Baustoffklasse B2 schon bei höherem Gehalt an Treibmittel, im Vergleich zu den übrigen Mischungen aus Propan und Butan sowie reinem Butan, erreicht.

Der mit 100 %igem Butan extrudierte Polystyrolschaum erreicht erst nach drei Monaten Lagerung den Flammschutz gemäß der Baustoffklasse B2. Wird mit einer Propan-/Butanmischung im Gewichtsverhältnis 60 zu 40 extrudiert, dann wird schon innerhalb von drei Wochen Lagerung von Schaumrollenware oder nachgeschäumten Formkörpern bzw. Fertigprodukten eine gute Flammhemmung erreicht, wobei die Lagerungszeit jeweils ab Extrusionsdatum gerechnet wird.

Mit dem Verfahren nach der Erfindung können trotz Verwendung von brennbarem Treibmittel die flammhemmenden Eigenschaften von extrudierten Polystyrolschäumen oder Polystyrol-Formkörpern ohne Temperaturerhöhung erheblich schneller realisiert werden als bei herkömmlichen Polystyrolschäumen, die mit anderen Treibgasen geschäumt werden. Wichtig ist dabei die Tatsache, daß die Schaumdichten der Polystyrol-Schaumfolien und der Plattenwaren etwa in der gleichen Größenordnung bleiben.

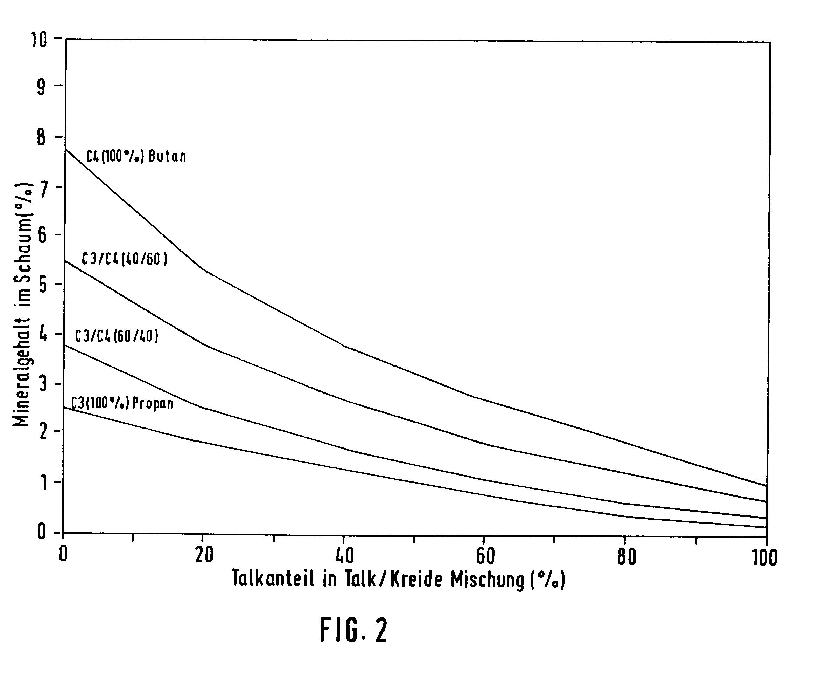

Aus Figur 2 ist das Nukleierungsverhalten der Nukleierungsmittel für einige Propan- und Butanmischverhältnisse dargestellt. Mit steigendem Anteil Propan in der Propan-/Butantreibmittelmischung nimmt der Nukleierungseffekt zu, daher muß der Talkumanteil reduziert werden. Wird zusätzlich den Ausgangsstoffen der Polystyrolschmelze Regenerat zugefügt, fällt die Nukleierung zu stark aus. Der Talkumanteil im Talkum/Kreidegemisch beträgt dabei nur 0,2 bis 0,6 Prozent. Wird anstelle von Talkum Kreide oder eine Kreide/Talkummischung als Nukleierungsmittel eingesetzt, so wird der Nukleierungseffekt auf das gewünschte Maß abgeschwächt, so daß eine höhere und genauere Dosierung mit Nukleierungsmittel eingesetzt werden kann.

Die Kurven in Figur 2 zeigen den Mineralgehalt im Polystyrolschaum in Gewichtsprozent, in Abhängigkeit von dem Talkumanteil in Talkum/Kreidemischungen in Prozenten. Parameter dieser Kurven ist die Alkanzusammensetzung des Treibmittels. Die oberste Kurve hat als Treibmittel 100 % Butan, während die unterste Kurve als Treibmittel 100 % Propan aufweist. Die beiden dazwischenliegenden Kurven haben ein Mischverhältnis von Propan zu Butan von 40 zu 60 bzw. 60 zu 40.

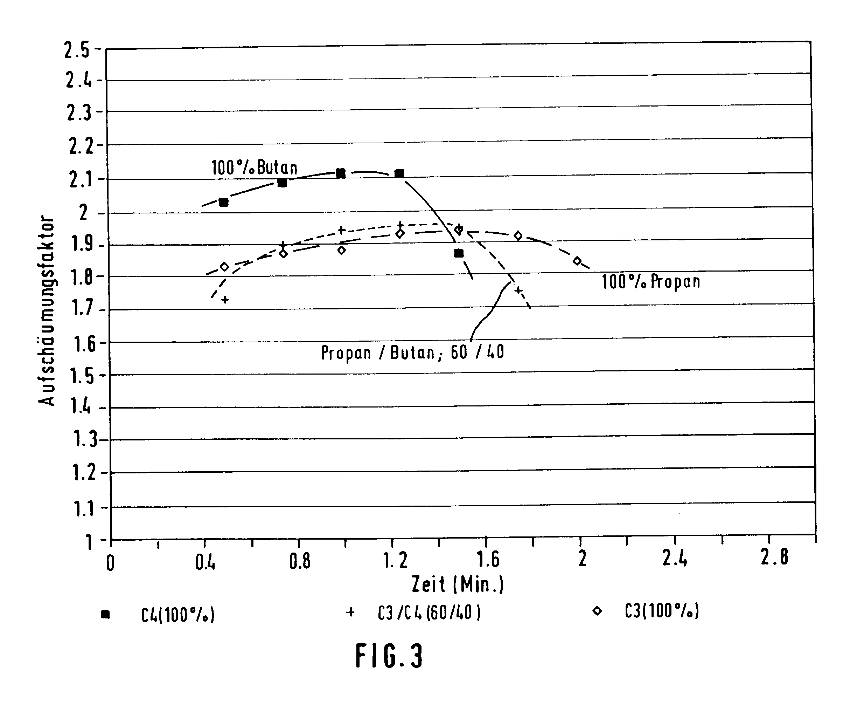

In Figur 3 ist der Aufschäumungsfaktor über der Behandlungszeit in Minuten aufgetragen. Der Aufschäumungsfaktor ist definiert als der Quotient aus der Schaumdicke nach und vor der Wärmebehandlung von Polystyrolschäumen bzw. Polystyrol-Formkörpern. Die Aufschäumungsfaktormessung erfolgt dabei im allgemeinen bei 130 °C durch konvektive Warmluftumwälzung in einem Wärmeofen. Für den Postexpansionsvorgang von konditionierten Polystyrolschäumen oder -Festkörpern ist ein Aufschäumungsfaktor von 1,8 bis 2,0 voll ausreichend, was gleichbedeutend damit ist, daß sich die Dickenabmessungen der nachträglich wärmebehandelten Produkte um diesen Faktor 1,8 bis 2,0 vergrößern. Der Postexpansionsvorgang erfolgt im allgemeinen nach einer Lagerungszeit von zwei bis sieben Tagen. Dies bedeutet, daß für die Postexpansion noch ausreichend Treibmittel in den geschlossen-zelligen Poren vorhanden sein muß, das sich dann durch die konvektive Wärmebehandlung bei 130 °C über eine Zeitspanne von etwa 2 bis 2,4 Minuten entsprechend ausdehnt und somit die Vergrößerung der Abmessungen bzw. die Verringerung der Schaumdichte herbeiführt. Die Lagerung der Produkte erfolgt im allgemeinen bei einer Umgebungstemperatur von 22 °C. Aus den drei dargestellten Kurven in Figur 3 ist ersichtlich, daß mit größerem Propananteil im Treibmittel die Verarbeitungszeit zunimmt, da die relativ flach verlaufende Kurve für ein Treibmittel aus 100 % Propan eine Verarbeitungszeit von 0,4 bis etwa 2 Minuten zuläßt, während bei den beiden übrigen Kurven, mit geringerem Propananteil im Treibmittel, der Bereich der Verarbeitungszeit kleiner als 1,8 Minuten ist.

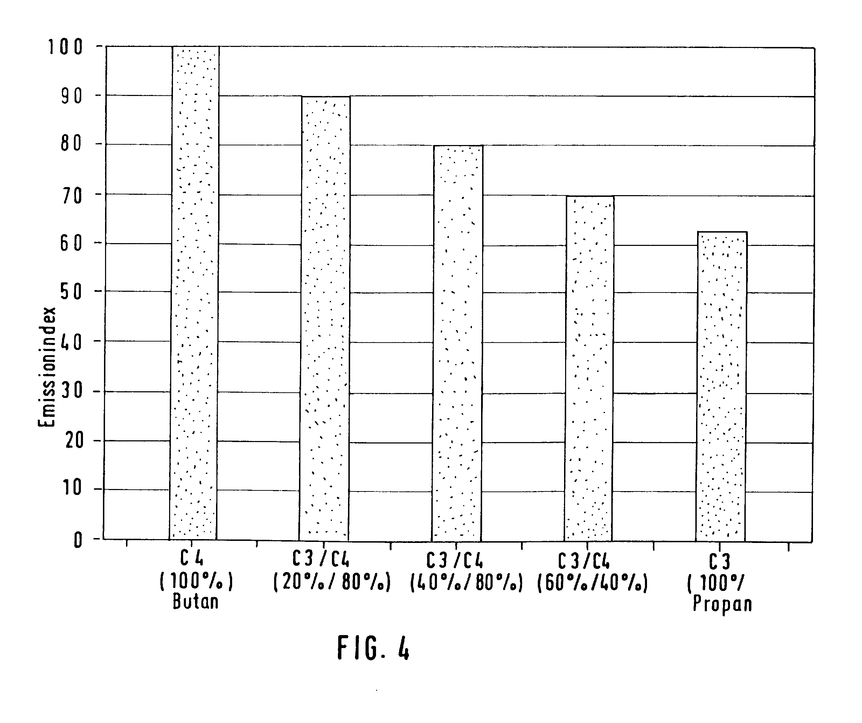

Figur 4 zeigt den Emissions-Index von Kohlenwasserstoffen bei der Herstellung von Polystyrolschäumen mit einer Schaumdichte von 65 g/l mit Treibmittelzusätzen aus 100 % Butan, Propan-/Butanmischungen im Verhältnis 20 zu 80 %, 40 zu 60 % und 60 zu 40 % sowie von 100 % Propan. Aus Figur 4 ist ersichtlich, daß durch die Verwendung von Propan und auch von Propan-/Butanmischungen die Kohlenwasserstoffemission gegenüber einem Zusatz aus 100 % Butan reduziert wird. Insofern wird durch die Auswahl des entsprechenden Treibmittelzusatzes die Umweltbelastung durch Kohlenwasserstoffemissionen verringert.

**Beispiel**

Es wurden mit Polystyrolschäumen, hergestellt nach dem voranstehend beschriebenen erfindungsgemäßen Verfahren, Brennversuche nach DIN 4102-B2 durchgeführt, wobei die Extrusionsschäume ein Flächengewicht von 200 g/m$^2$ aufweisen. Die Schaumdichte betrug durchgehend 65 g/l.

Die Treibmittel waren 100 %iges Butan, Propan/Butanmischungen von 20 zu 80, 60 zu 40 und 100 %iges Propan. Der Gewichtsanteil des Treibmittels lag bei einer Lagerungszeit von drei Wochen bis zwei Monaten zwischen 2,8 und 1,2 %. Es wurde eine Flammhemmung der Baustoffklasse B2 bei drei Wochen Lagerungszeit für eine 60 zu 40 Propan-/Butanmischung und für 100 %iges Propan als Treibmittel erhalten, nicht jedoch für niedrigere Propananteile als 60 % im Treibmittel. Bei einer Lagerung von zwei Monaten wurde diese Flammhemmung auch für eine 20 zu 80 Propan-/Butanmischung erzielt.

**Patentansprüche**

1. Verfahren zum Verschäumen von flammhemmend ausgerüstetem Polystyrol durch Zusatz eines Treibmittels wie Propan, Butan, dadurch gekennzeichnet, daß der Polystyrolschmelze Mischungen aus Propan und Butan mit 60 bis 90 Vol.-% Propan und 40 bis 10 Vol.-% n-Butan und/oder iso-Butan zugemischt werden und daß der Gehalt an Treibmittel bis zu 3 Gew.-% des Gesamtgewichts des Polystyrols ausmacht.

2. Verfahren nach Anspruch 1, dadurch gekennzeichnet, daß die Polystyrolschmelze aus einem Polystyrol-Copolymerisat, einem Copolymerisat aus Styrol und Butadien oder Polymeren des Styrols oder Mischungen hiervon erschmolzen wird.

3. Verfahren nach Anspruch 2, dadurch gekennzeichnet, daß die Polystyrolschmelze aus Styrol-Maleinsäure-Anhydridcopolymeren, Acryl-Butadienstyrol und Mischungen hiervon erschmolzen wird und daß Polyphenylenoxid zugemischt wird.

4. Verfahren nach Anspruch 1, dadurch gekennzeichnet, daß die Polystyrolschmelze aus Polystyrolgranulat, Flammschutzmittel und Nukleierungsmittel in einem ersten Extrusionsschritt aufgeschmolzen wird, daß das Treibmittel unter hohem Druck von bis zu 350 bar am Ende des ersten Extrusionsschrittes in die Polystyrolschmelze injiziert und mit dieser homogen vermischt wird und daß vor einem zweiten Extrusionsschritt die Polystyrolschmelze weiter homogenisiert und auf eine Massetemperatur unterhalb von 150 °C vor der Extrusion abgekühlt wird.

5. Verfahren nach Anspruch 4, dadurch gekennzeichnet, daß als Nukleierungsmittel Kreide und/oder Talkum, in Abhängigkeit von der Treibmittelzusammensetzung, zugesetzt werden.

6. Verfahren nach Anspruch 4, dadurch gekennzeichnet, daß als endotherme Nukleierungsmittel Citronsäure und Natriumcarbonat zugesetzt werden.

7. Verfahren nach Anspruch 5, dadurch gekennzeichnet, daß der Talkumanteil in der Talkum-/Kreidemischung mit steigendem Propananteil in dem Treibmittel verringert wird.

8. Verfahren nach Anspruch 4, dadurch gekennzeichnet, daß als Flammschutzmittel halogenierte Alkylarylphosphate, Ammoniumpolyphosphate, Hexabromcyclododecan oder Magnesiumhydroxid zugesetzt werden.

9. Verfahren nach Anspruch 4, dadurch gekennzeichnet, daß die Schaumbildung der Polystyrolschmelze beim Austreten aus der Extrusionsdüse und außerhalb der Extrusionsdüse im zweiten Extrusionsschritt erfolgt und daß die Zellen des Polystyrolschaumes unmittelbar nach der Schaumbildung mit Treibmittel gefüllt sind.

10. Polystyrol-Formkörper aus extrudiertem Polystyrolschaum, der ein Treibmittelgas und ein Flammschutzmittel enthält, dadurch gekennzeichnet, daß der Polystyrol-Formkörper eine Dicke von 1 bis 10 mm, eine Breite von 50 bis 320 cm, eine Schaumdichte von 30 bis 70 g/l und einen Treibmittelgehalt von bis zu 3,0 Gew.-% hat, wobei das Treibmittelgas aus einer Mischung aus Propan und Butan mit 60 bis 90 Vol.-% Propan und 40 bis 10 Vol.-% n-Butan und/oder iso-Butan besteht.

11. Polystyrol-Formkörper nach Anspruch 10, dadurch gekennzeichnet, daß er aus Plattenware mit einer Dicke von 2 bis 10 mm, einer Breite von 50 bis 200 cm, einer Schaumdichte von 30 bis 40 g/l und einem Treibmittelgehalt nach 3 Wochen Lagerungszeit bis zu 1,9 Gew.% besteht.

12. Polystyrol-Formkörper nach Anspruch 10, dadurch gekennzeichnet, daß er nach einer Lagerungszeit von 1 bis 13 Wochen normal- bis schwerentflammbar gemäß den Baustoffklassen B2 und Bl nach DIN 4102 ist.

13. Polystyrol-Formkörper nach den Ansprüchen 10 bis 12, dadurch gekennzeichnet, daß sich durch eine nachträgliche Wärmebehandlung innerhalb einer Woche nach der Extrusion die Dicke um einen Faktor von 1,8 bis 2,0 vergrößert.

**Claims**

1. A process for foaming polystyrene which has been given a flame retardant treatment by addition of a blowing agent, such as proprane or butane, which comprises mixing into the polystyrene melt mixtures of propane and butane containing 60 to 90% by volume of propane and 40 to 10% by volume of n-butane and/or iso-butane, where the content of blowing agent comprises up to 3% by weight of the total weight of the polystyrene.

2. The process as claimed in claim 1, wherein the polystyrene melt is melted from a polystyrene copolymer, a copolymer of styrene and butadiene or a polymer of styrene or mixtures thereof.

3. The process as claimed in claim 2, wherein the polystyrene melt is melted from a styrene/maleic acid/anhydride copolymer, acrylic/butadiene/styrene and mixtures thereof and polyphenylene oxide is mixed in.

4. The process as claimed in claim 1, wherein the polystyrene melt is melted from polystyrene granules, a flameproofing agent and a nucleating agent in a first extrusion step, the blowing agent is injected into the polystyrene melt under a high pressure of up to 350 bar at the end of the first extrusion step and is mixed homogeneously with this, and, before a second extrusion step, the polystyrene melt is homogenized further and cooled to a melt temperature of below 150°C before the extrusion.

5. The process as claimed in claim 4, wherein chalk and/or talc, depending on the blowing agent composition, are/is added as the nucleating agent.

6. The process as claimed in claim 4, wherein citric acid and sodium carbonate are added as the endothermal nucleating agent.

7. The process as claimed in claim 5, wherein the talc content in the talc/chalk mixture is reduced as the propane content in the blowing agent increases.

8. The process as claimed in claim 4, wherein a halogenated alkyl-aryl phosphate, an ammonium polyphosphate, hexabromocyclododecane or magnesium hydroxide is added as the flameproofing agent.

9. The process as claimed in claim 4, wherein the foaming of the polystyrene melt is carried out on emergence from the extrusion die and outside the extrusion die in the second extrusion step, and the cells of the polystyrene foam are filled with blowing agent immediately after the foaming.

10. A polystyrene shaped article of extruded polystyrene foam which contains a blowing agent gas and a flameproofing agent, wherein the polystyrene shaped article has a thickness of 1 to 10 mm, a width of 50 to 320 cm, a foam density of 30 to 70 g/l and a blowing agent content of up to 3.0% by weight, the blowing agent gas comprising a mixture of propane and butane containing 60 to 90% by volume of propane and 40 to 10% by volume of n-butane and/or iso-butane.

11. A polystyrene shaped article as claimed in claim 10, which comprises sheet goods having a thickness of 2 to 10 mm, a width of 50 to 200 cm, a foam density of 30 to 40 g/l and a blowing agent content after a storage period of 3 weeks of up to 1.9% by weight.

12. A polystyrene shaped article as claimed in claim 10, which is normally flammable to flame retardant according to building material classes B2 and B1 in accordance with DIN 4102 after a storage time of 1 to 13 weeks.

13. A polystyrene shaped article as claimed in claims 10 to 12, wherein the thickness increases by a factor of 1.8 to 2.0 by subsequent heat treatment within one week after the extrusion.

**Revendications**

1. Procédé pour l'expansion de polystyrène ignifuge, par addition d'un agent porogène tel que le propane, le butane, caractérisé en ce que l'on ajoute à la masse fondue de polystyrène des mélanges de propane et de butane contenant de 60 à 90 % en volume de propane et de 40 à 10 % en volume de butane et/ou d'isobutane, et en ce que la teneur en agent porogène représente jusqu'à 3 % en poids du poids total du polystyrène.

2. Procédé selon la revendication 1, caractérisé en ce que la masse fondue de polystyrène est fondue à partir d'un copolymère de polystyrène, d'un copolymère de styrène et de butadiène ou de polymères du styrène, ou de mélanges de ceux-ci.

3. Procédé selon la revendication 2, caractérisé en ce que la masse fondue de polystyrène est fondue à partir de copolymères styrène/anhydride maléique, acrylique/ butadiène/styrène et de mélanges de ceux-ci, et en ce que l'on y ajoute du poly(oxyde de phénylène).

4. Procédé selon la revendication 1, caractérisé en ce que la masse fondue de polystyrène, à base de granulé de polystyrène, agent ignifuge et agent de nucléation, est fondue dans une première étape d'extrusion, en ce que, à la fin de la première étape d'extrusion, l'agent porogène est injecté, sous une pression élevée allant jusqu'à 350 bars, dans la masse fondue de polystyrène et mélangé de façon homogène avec celle-ci, et en ce que, avant une seconde étape d'extrusion, la masse fondue de polystyrène est homogénéisée davantage et refroidie jusqu'à une température de la masse inférieure à 150°C, avant l'extrusion.

5. Procédé selon la revendication 4, caractérisé en ce que, comme agent de nucléation, on ajoute de la craie et/ou du talc, en fonction de la composition de l'agent porogène.

6. Procédé selon la revendication 4, caractérisé en ce que, comme agent de nucléation endothermique, on ajoute de l'acide citrique et du carbonate de sodium.

7. Procédé selon la revendication 5, caractérisé en ce que, dans l'agent porogène, on diminue la proportion de talc dans le mélange de talc et de craie, avec une proportion croissante de propane.

8. Procédé selon la revendication 4, caractérisé en ce que, comme agent ignifuge, on ajoute des alkylarylphosphates halogénés, des polyphosphates d'ammonium, de l'hexabromocyclodécane ou de l'hydroxyde de magnésium.

9. Procédé selon la revendication 4, caractérisé en ce que le moussage de la masse fondue de polystyrène s'effectue dans la seconde étape d'extrusion, à la sortie de la filière d'extrusion et hors de la filière d'extrusion, et en ce que les cellules de la mousse de polystyrène sont remplies avec de l'agent porogène, immédiatement après le moussage.

10. Corps moulé en polystyrène, à base de mousse de polystyrène extrudée, qui contient un gaz porogène et un agent ignifuge, caractérisé en ce que le corps moulé en polystyrène a une épaisseur de 1 à 10 mm, une largeur de 50 à 320 cm, une densité de mousse de 30 à 70 g/l et une teneur en agent porogène allant jusqu'à 3,0 % en poids, le gaz porogène consistant en un mélange de propane et de butane contenant de 60 à 90 % en volume de propane et de 40 à 10 % en volume de butane et/ou d'isobutane.

11. Corps moulé en polystyrène selon la revendication 10, caractérisé en ce qu'il consiste en une panneau ayant une épaisseur de 2 à 10 mm, une largeur de 50 à 200 cm, une densité de mousse de 30 à 40 g/l et une teneur en agent porogène, après 3 semaines de stockage, allant jusqu'à 1,9 % en poids.

12. Corps moulé en polystyrène selon la revendication 10, caractérisé en ce que, après un temps de stockage de 1 à 13 semaines, il est normalement à difficilement inflammable, conformément aux classes de matériaux B2 et B1 selon DIN 4102.

13. Corps moulé en polystyrène selon les revendications 10 à 12, caractérisé en ce que l'épaisseur augmente par un facteur de 1,8 à 2,0, en raison d'un traitement thermique ultérieur en l'espace d'une semaine après l'extrusion.

Alkangehalt im PS Schaum (Gew.%)

Konditionierungszeit ($\sqrt{h}$)

Legend:
- C3/C4(0%/100%) — Butan 100%
- C3/C4(20%/80%)
- C3/C4(40%/60%)
- C3/C4(60%/40%)
- C3/C4(100%/0%) — Propan 100%

3. Woche
13. Woche

FIG. 1

FIG. 2

FIG.3

EP 0 632 090 B1

FIG. 4